**Europäisches Patentamt**

**European Patent Office**

**Office européen des brevets**

(19)

(11) Veröffentlichungsnummer: **0 017 060 B2**

(12) # NEUE EUROPÄISCHE PATENTSCHRIFT

(45) Veröffentlichungstag der neuen Patentschrift:
30.10.91 Patentblatt 91/44

(51) Int. Cl.$^5$: **C08G 18/42, C08G 18/66**

(21) Anmeldenummer: **80101376.4**

(22) Anmeldetag: **17.03.80**

(54) Verfahren zur Herstellung von Polyurethan-Elastomeren.

(30) Priorität: **19.03.79 DE 2910769**

(43) Veröffentlichungstag der Anmeldung:
**15.10.80 Patentblatt 80/21**

(45) Bekanntmachung des Hinweises auf die
Patenterteilung:
**06.02.85 Patentblatt 85/06**

(45) Bekanntmachung des Hinweises auf die
Entscheidung über den Einspruch:
**30.10.91 Patentblatt 91/44**

(84) Benannte Vertragsstaaten:
**AT BE CH DE FR GB IT NL SE**

(56) Entgegenhaltungen:
DE-A- 1 157 386
DE-A- 1 694 141
DE-A- 2 321 142
GB-A- 804 839

(56) Entgegenhaltungen:
GB-A- 877 723
GB-A- 975 303
GB-A- 1 055 304
GB-A- 1 081 705
GB-A- 1 475 541
US-A- 2 749 329
"Block Copolymers", D.C. Allport & W.H. Janes; Applied Science Publishers Ltd, London 1973, p.445-456

(73) Patentinhaber: **BASF Aktiengesellschaft**
Carl-Bosch-Strasse 38
W-6700 Ludwigshafen (DE)

(72) Erfinder: **Braune, Peter, Dr.**
In den Wiesen
W-6521 Moelsheim (DE)
Erfinder: **Rebafka, Walter, Dr.**
Schuetzenstrasse 4
W-6901 Eppelheim (DE)
Erfinder: **Weyland, Peter, Dr.**
Ludwigshafener Strasse 12A
W-6710 Frankenthal (DE)

EP 0 017 060 B2

## Beschreibung

Die Erfindung betrifft ein Verfahren zur Herstellung von gegebenenfalls zellhaltigen polyurethan-Elastomeren aus organischen Polyisocyanaten, höhermolekularen Polyhydroxyverbindungen und Kettenverlängerungsmittel, wobei die höhermolekularen Polyhydroxyverbindungen durch polykondensation von organischen Dicarbonsäuren mit einer Diolmischung, die enthält 10 bis 30 Gew.% Butandiol-1,4, 40 bis 60 Gew.% Pentandiol-1,5 und 15 bis 35 Gew.% Hexandiol-1,6, bezogen auf das Gesamtgewicht der Diolmischung, erhalten werden.

Die Herstellung von Polyurethanelastomeren aus Polyesterpolyolen, Polyisocyanaten und Kettenverlängerer ist in zahlreichen Literaturstellen und Patentschriften beschrieben. Die Polyaddition kann dabei in Abwesenheit als auch in Gegenwart indifferenter Lösungsmittel erfolgen.

Neben vielen Eigenschaften dieser Elastomeren, wie mechanischen Festigkeitswerten, Dehnung, Elastizität, Licht- und Oxidationsbeständigkeit sind insbesondere hohe Hydrolysebeständigkeit, Kältestabilität und ein niedriger Druckverformungsrest erwünscht. Diese Eigenschaften werden sehr wesentlich durch die Wahl der die Elastomeren bildenden Ausgangsstoffe bestimmt. In der Praxis verwendet man als Polyolkomponente bevorzugt endständige Hydroxylgruppen tragende, vorwiegend lineare und äthergruppenfreie Polyester, die durch Kondensation von Dicarbonsäuren mit Diolen hergestellt werden. Im Vergleich mit Polyurethan-Elastomeren auf Basis Polyätherpolyole oder äthergruppentragender Polyole zeichnen sich diese Polyester-Polyurethane durch ein höheres mechanisches Eigenschaftsniveau aus und zusätzlich noch durch geringere Anfälligkeit gegen Licht- und Oxidationsmitteleinwirkung. Bedingt durch die in den Polyurethanen enthaltenen Estergruppen sind diese Elastomeren jedoch relativ anfällig gegen Hydrolyse, was sich im Abfall der mechanischen Werte nach längerer Einwirkung von Wasser oder Wasserdampf äussert. Dies ist besonders bei Verwendung von Polyesterolen der Fall, deren Diolkomponenten Äthylenglykol, Diäthylenglykol, Propylenglykol oder Butandiol-1,4 sind. Zur Verbesserung der Hydrolysebeständigkeit der Polyurethane wurden daher Polyesterole auf Basis Adipinsäure/Hexandiol-1,6 verwendet. Diese Polyesterole ergeben zwar ausgezeichneten Hydrolyseschutz, nachteilig ist jedoch deren erhöhte Kristallisationsneigung, die sich in einer Verhärtung und in einer schlechten Kältefestigkeit der Elastomeren bemerkbar macht (schlechteres elastisches Verhalten bei tiefen Temperaturen).

Durch Verwendung von die Kristallisation störenden Diolmischungen in der Polyesterkomponente wurde versucht, das Kälteverhalten der Polyurethane zu verbessern. Dafür bekannte Polyesterole aus Adipinsäure, Äthylenglykol und Butandiol-1,4 ergeben jedoch Polyurethane mit nicht ausreichender Hydrolysebeständigkeit. Weiterhin ist bekannt, die Hydrolysebeständigkeit der Elastomeren zu verbessern und gleichzeitig deren Kristallisationstendenz zu vermindern, indem man in den Polyesterteil verzweigte Diole, insbesondere 2,2-Dimethylpropandiol-1,3 neben Hexandiol-1,6 einbaut (GB-A-975 303). Aber auch die mit diesen Polyesterolen hergestellten Polyurethan-Elastomeren sind bezüglich ihres Kälteverhaltens verbesserungswürdig. Zudem sind diese Polyesterole bei Raumtemperatur fest und müssen vor der Verarbeitung aufgeschmolzen werden.

Der Druckverformungsrest von Polyurethan-Elastomeren auf Basis von Polyesterolen bekannter Art, einschliesslich derer aus Polycaprolactondiol, zeigt ein Niveau, das noch nicht alle Wünsche befriedigt. Insbesondere für technische Teile, z. B. in der Automobilindustrie, wird aus Gründen der Formstabilität, der Verschleissfestigkeit und der damit verbundenen Erhöhung der Betriebssicherheit belasteter Teile ein möglichst niedriger Druckverformungsrest angestrebt.

Aufgabe der vorliegenden Erfindung war es aus flüssigen und daher einfach zu verarbeitenden Ausgangskomponenten gegebenenfalls zellhaltige Polyurethan-Elastomere zu entwickeln, die bei mit Handelsprodukten vergleichbaren mechanischen Eigenschaften, eine hohe Hydrolysenbeständigkeit und gutes Tieftemperaturverhalten aufweisen und einen verbesserten Druckverformungsrest besitzen.

Diese Aufgabe konnte überraschenderweise durch die Verwendung spezieller Polyesterole bei der Herstellung der Polyurethan-Elastomeren gelöst werden.

Gegenstand der vorliegenden Erfindung ist somit ein Verfahren zur Herstellung von gegebenenfalls zellhaltigen Polyurethan-Elastomeren aus organischen Polyisocyanaten, höhermolekularen Polyhydroxyverbindungen und Kettenverlängerungsmitteln in Gegenwart von gegebenenfalls Katalysatoren, Treibmitteln, Hilfs- und Zusatzstoffen, das dadurch gekennzeichnet ist, dass man als Polyhydroxyverbindungen Polyesterole verwendet, die durch Polykondensation von organischen Dicarbonsäuren mit einem Alkoholgemisch hergestellt werden, das besteht aus:

40 bis 100 Gew.-%, bezogen auf das Alkoholgemisch, einer Diolmischung, die ihrerseits im wesentlichen besteht aus

a) 10 bis 30 Gew.-% Butandiol-1,4,

b) 40 bis 60 Gew.-% Pentandiol-1,5 und

c) 15 bis 35 Gew.-% Hexandiol-1,6,

2

wobei die Gew.-% bezogen sind auf das Gesamtgewicht der Diolmischung, und

60 bis 0 Gew.-%, bezogen auf das Alkoholgemisch, eines zweiwertigen Alkohols aus der Gruppe von Ethylenglykol, Propylenglykol-1,2 und -1,3, Octandiol-1,8, Neopentylglykol, 1,4-Bis-hydroxymethylcyclohexan, 2-Methylpropandiol-1,3, 3-Methylpentandiol-1,5, Diethylenglykol, Dipropylenglykol und Dibutylenglykol

oder

90 bis 98 Gew.-%, bezogen auf das Alkoholgemisch, der obengenannten Diolmischung und

2 bis 10 Gew.-%, bezogen auf das Alkoholgemisch, eines drei- und/oder vierwertigen Alkohols.

Das erfindungsgemässe Verfahren weist den Vorteil auf, dass die Polyesterole flüssig und daher gut verarbeitbar sind, obwohl die Diolreste keine Alkylseitengruppen oder Äthergruppen besitzen. Die aus den erfindungsgemäss verwendbaren Polyesterolen hergestellten, gegebenenfalls zellhaltigen, Polyurethan-Elastomeren besitzen gute mechanische Eigenschaften, insbesondere einen hervorragenden Druckverformungsrest bei gleichzeitig hoher Hydrolysenbeständigkeit und gutem Tieftemperaturverhalten.

Für die Herstellung der gegebenenfalls zellhaltigen Polyurethan-Elastomeren nach dem erfindungsgemässen Verfahren werden als Polyhydroxyverbindungen Polyesterole mit Molekulargewichten von 600 bis 4000, vorzugsweise 800 bis 3000, insbesonders 1500 bis 2500, verwendet. Die Polyesterole sind vorzugsweise zumindest überwiegend linear, d. h. im Sinne der Isocyanatreaktion difunktionell. Werden höherfunktionelle Polyesterole allein oder im Gemisch mit difunktionellen Polyesterolen verwendet, so können diese nur in solchen Mengen eingesetzt werden, dass die Funktionalität bzw. durchschnittliche Funktionalität des Gemisches maximal 3, vorzugsweise 2,1 bis 2,7 ist. Die Polyesterole können dabei als Einzelkomponenten oder in Form von Mischungen untereinander zur Anwendung gelangen.

Geeignete Polyesterole können beispielsweise aus Dicarbonsäuren mit 2 bis 12 Kohlenstoffatomen, vorzugsweise aliphatischen Dicarbonsäuren und den erfindungsgemäss verwendbaren Diolmischungen, gegebenenfalls unter zusätzlicher Mitverwendung von anderen mehrwertigen Alkoholen hergestellt werden.

Als Dicarbonsäuren kommen beispielsweise in Betracht: aliphatische Dicarbonsäuren, wie Bernsteinsäure, Glutarsäure, Adipinsäure, Korksäure, Azelainsäure, Sebacinsäure, Decandicarbonsäure, Maleinsäure und Fumarsäure, sowie aromatische Dicarbonsäuren, wie Phthalsäure, Isophthalsäure und Terephthalsäure. Die Dicarbonsäuren können dabei sowohl einzeln als auch im Gemisch untereinander verwendet werden. Bewährt haben sich beispielsweise Dicarbonsäuregemische, die 20 bis 35 Gew.%, vorzugsweise 28 bis 33 Gew.% Bernsteinsäure, 35 bis 50 Gew.%, vorzugsweise 40 bis 45 Gew.% Glutarsäure und 20 bis 32 Gew.%, vorzugsweise 24 bis 28 Gew.% Adipinsäure, bezogen auf das Gesamtgewicht der genannten Dicarbonsäure enthalten. Das Dicarbonsäuregemisch kann daneben noch bis zu 5 Gew.%, vorzugsweise bis 3 Gew.%, bezogen auf das Gesamtgewicht, Verunreinigungen enthalten, welche im wesentlichen aus Imiden der Bernstein- und Glutarsäure bestehen. Dicarbonsäuregemische der genannten Art können beispielsweise als Nebenprodukte bei der Herstellung von Adipinsäure durch Oxidation von Cyclohexanol oder Cyclohexanon mit Salpetersäure gewonnen werden.

Anstelle der freien Dicarbonsäuren können auch die entsprechenden Dicarbonsäurederivate, wie Dicarbonsäureester von niederen Alkoholen oder Dicarbonsäureanhydride eingesetzt werden. Vorzugsweise verwendet werden Dicarbonsäuregemische aus Bernstein-, Glutar- und Adipinsäure in den obengenannten Gewichtsverhältnissen und insbesondere Adipinsäure.

Als Diolmischungen kommen im Sinne der Erfindung solche in Betracht, die 10 bis 30 Gew.%, vorzugsweise 18 bis 28 Gew.% Butandiol-1,4, 40 bis 60 Gew.%, vorzugsweise 45 bis 55 Gew.% Pentandiol-1,5 und 15 bis 35 Gew.%, vorzugsweise 25 bis 30 Gew.% Hexandiol, bezogen auf das Gesamtgewicht der Diole enthalten.

Die Diolmischungen können durch katalytische Hydrierung der obengenannten Mischungen aus Bernstein-, Glutar- und Adipinsäure, beispielsweise entsprechend den Angaben der DE-OS 2 321 101, und anschliessender Reinigung der Diolmischungen nach üblichen Verfahren erhalten werden.

Je nach den gewünschten Eigenschaften der Polyesterole und den daraus hergestellten Polyurethan-Elastomeren kann die Diolmischung allein oder gegebenenfalls im Gemisch mit anderen mehrwertigen Alkoholen zur Herstellung der Polyesterole verwendet werden.

Neben den zur Diolmischung gehörenden Diolen Butandiol-1,4, Pentandiol-1,5 und Hexandiol-1,6 seien als andere mehrwertige Alkohole beispielhaft genannt: zweiwertige Alkohole, wie Ethylenglykol, Propylenglykol-1,2 und -1,3, Octandiol-1,8, Neopentylglykol, 1,4-Bis-hydroxymethylcyclohexan, 2-Methylpropandiol-1,3, 3-Methylpentandiol-1,5, Diäthylenglykol, Dipropylenglykol und Dibutylenglykol und drei- und vierwertige Alkohole, wie Glycerin, Trimethylolethan, Trimethylolpropan, Trimethylolbutan und Pentaerythrit. Vorzugsweise Anwendung finden Ethylenglykol und die dreiwertigen Alkohole Glycerin, Trimethylolpropan und Trimethylolbutan. Geeignete Alkoholgemische weisen beispielsweise folgende Zusammensetzung auf:

40 bis 100 Gew.-%, vorzugsweise 60 bis 100 Gew.-%, bezogen auf das Alkoholgemisch, einer Diolmischung, die ihrerseits im wesentlichen besteht aus

a) 10 bis 30 Gew.-% Butandiol-1,4,

b) 40 bis 60 Gew.-% Pentandiol-1,5 und

c) 15 bis 35 Gew.-% Hexandiol-1,6,

wobei die Gew.-% bezogen sind auf das Gesamtgewicht der Diolmischung, und

60 bis 0 Gew.-%, vorzugsweise 40 bis 0 Gew.-%, bezogen auf das Alkoholgemisch, eines zweiwertigen Alkohols aus der Gruppe von Ethylenglykol, Propylenglykol-1,2 und -1,3, Octandiol-1,8, Neopentylglykol, 1,4-Bis-hydroxymethylcyclohexan, 2-Methylpropandiol-1,3, 3-Methylpentandiol-1,5, Diethylenglykol, Dipropylenglykol und Dibutylenglykol, vorzugsweise Ethylenglykol, insbesondere bei der Veresterung mit Dicarbonsäuregemischen aus Bernstein-, Glutar- und Adipinsäure in der obengenannten Zusammensetzung.

Zur Herstellung von Polyesterolen mit einer Funktionalität grösser als zwei werden Alkoholgemische aus 90 bis 98 Gew.-%, vorzugsweise 92 bis 96 Gew.-%, der erfindungsgemäss verwendbaren Diolmischung und 2 bis 10 Gew.-%, vorzugsweise 4 bis 8 Gew.-%, bezogen auf das Gesamtgewicht des Alkoholgemisches, eines drei- und/oder vierwertigen Alkohols, vorzugsweise Glycerin, Trimethylolpropan oder Trimethylolbutan, verwendet.

Die Herstellung der erfindungsgemäss zu verwendendet. Polyesterole erfolgt nach an sich bekannten Verfahren durch Polykondensation der Dicarbonsäuren und der Diolmischung bzw. der Gemische aus Diolmischung und anderen mehrwertigen Alkoholen bei Temperaturen von 100 bis 250°C, vorzugsweise 130 bis 220°C, gegebenenfalls in Gegenwart von an sich bekannter Veresterungskatalysatoren wie organischen Verbindungen von Titan, Vanadium oder Zinn und/oder Wasserschleppmitteln, wie Benzol, Toluol, Xylol, Chlorbenzol zur azeotropen Destillation des Kondenswassers, bevorzugt unter vermindertem Druck in der Endphase der Polykondensation. Die Ausgangskomponenten werden hierzu in solchen Mengen kondensiert, dass das Verhältnis von COOH:OH Gruppen 1:1,05 bis 1,5, vorzugsweise 1:1,06 bis 1,4 und insbesonders 1:1,08 bis 1,2 ist. Die erhaltenen Polyesterole weisen eine Säurezahl kleiner als 4, vorzugsweise kleiner als 1 mg KOH/g auf.

Neben den Polyesterolen werden als weitere mit Isocyanaten reagierende Komponente niedermolekulare Kettenverlängerungsmittel mit Molekulargewichten kleiner als 450, vorzugsweise von 60 bis 350 zur Herstellung der Polyurethan-Elastomeren verwendet. Das molare Verhältnis von Polyesterol zu Kettenverlängerungsmittel ist abhängig von der gewünschten Härte des Polyurethan-Elastomeren und kann in breiten Grenzen variiert werden. Bewährt haben sich beispielsweise molare Verhältnisse von Polyesterol zu Kettenverlängerungsmitteln von 1:0,5 bis 15, vorzugsweise von 1:2 bis 10. Als niedermolekulare Kettenverlängerungsmittel seien beispielhaft gennant: Diole, wie

Äthylenglykol, Butandiol-1,4,

Hexandiol-1,6, Octandiol-1,8,

Di- und Triäthylenglykol, Neopentylglykol,

1,4-Bis-hydroxymethylcyclohexan,

Hydrochinon-bis-β-hydroxyäthyläther,

p-Xylylenglykol,

aliphatische und cycloaliphatische Diamine wie Äthylendiamin, 1,2- oder 1,3-Propylendiamin,

1,4-Butylendiamin, 1,6-Hexamethylendiamin,

2,2,4- und 2,4,4-Trimethylhexamethylendiamin-1,6,

Hexahydro-m-xylylendiamin,

1-Amino-3-aminomethyl-3,5,5,-trimethylcyclohexan,

1-Methylcyclohexan-2,4-diamin

4,4'-Diaminodicyclohexyl-methan,

Piperazin,

aromatische oder araliphatische Diamine wie 4,4'-Diamino-diphenylmethan,

3,3'-di- und 3,3',5,5'-tetraalkylsubstituierte

4,4'-Diamino-diphenylmethane mit 1 bis 4 Kohlenstoffatomen im Alkylrest, beispielsweise

3,3'-Dimethyl-4,4'-diaminodiphenylmethan

und 3,3',5,5'-Tetramethyl-4,4'-diaminodiphenylmethan

und m-Xylylendiamin.

Vorzugsweise verwendet werden Äthylenglykol, Butandiol-1,4, Hexandiol-1,6, 1-Amino-3-aminomethyl-3,5,5-trimethylcyclohexan und Piperazin.

Zur Herstellung der Polyurethan-Elastomeren sind organische Polyisocyanate der Formel $R(NCO)_n$ geeignet, worin R mehrwertige, vorzugsweise zweiwertige aliphatische, cycloaliphatische, alkylaromatische oder aromatische organische Reste oder gemischte Reste dieser Art und n eine ganze Zahl bedeuten, deren Wert der Valenzzahl von R entspricht und wenigstens zwei beträgt. Zu typischen organischen Polyisocyanaten für die erfindungsgemässen Zwecke gehören beispielsweise aliphatische Diisocyanate, wie Butan-1,4-diisocyanat, Hexan-1,6-diisocyanat, Decan-1,10-diisocyanat, Dodecan-1,12-diisocyanat, 2,2,4- und 2,4,4-Trimethylhexamethylendiisocyanat und die entsprechenden Isomerengemische, cycloaliphatische Diisocyanate wie Cyclohexan-1,3- und -1,4-diisocyanat und die entsprechenden Isomerengemische, 1-Methyl-2,4- und 2,6-cyclohexyl-diisocyanat und die entsprechenden Isomerengemische, 4,4'-, 2,4'- und 2,2'-Dicyclohexylmethandiisocyanat und die entsprechenden Isomerengemische und 3-Isocyanato-methyl-3,5,5-trimethylcyclohexylisocyanat und aromatische Diisocyanate, wie Naphthylen-diisocyanat-1,5, 2,4- und 2,6-Toluylen-diisocyanat und die entsprechenden Isomerengemische und 4,4'-, 2,4'- und 2,2'-Diisocyanato-diphenylmethan und die entsprechenden Isomerengemische. Geeignet sind ferner modifizierte Polyisocyanate, beispielsweise urethan-, carbodiimid-, biuret-, allophanat- und/oder isocyanurat-gruppenhaltige Polyisocyanate, z.B. derartig modifiziertes 4,4'-Diisocyanato-diphenylmethan. Die Polyisocyanate können einzeln oder als Gemisch zur Anwendung kommen.

Vorzugsweise verwendet werden Hexan-1,6-diisocyanat, 4,4'-Dicyclohexylmethandiisocyanat, 3-Isocyanatomethyl-3,5,5-trimethylcyclohexylisocyanat, 4,4'-Diisocyanatodiphenylmethan, 2,4- und 2,6-Toluylendiisocyanat und deren Isomerengemische und Naphthylendiisocyanat-1,5.

Zur Beschleunigung der Umsetzung zwischen den Polyesterolen, Kettenverlängerungsmitteln und organischen Polyisocyanaten können der Reaktionsmischung übliche Katalysatoren, beispielsweise tertiäre Amine und/oder Metallverbindungen wie sie im Kunststoffhandbuch, Band VII, Polyurethane, Carl-Hanser-Verlag, München, 1966, auf Seite 96-102 beschrieben sind, hinzugefügt werden. Bevorzugt sind 1,4-Diaza-bicyclo-(2,2,2)-octan, Zinnoctoat und Dibutylzinndilaurat.

Zur Erzielung günstiger Reaktionszeiten wird in Abhängigkeit von der Reaktivität des gewählten Katalysators bzw. Katalysatorgemisches die einzusetzende Menge empirisch ermittelt.

Nach dem erfindungsgemässen Verfahren können zellhaltige und vorzugsweise kompakte Polyurethan-Elastomere hergestellt werden. Zur Herstellung von zellhaltigen Produkten werden Treibmittel mitverwendet. Ein geeignetes Treibmittel ist beispielsweise Wasser, das mit Isocyanatgruppen unter Bildung von Kohlendioxid reagiert. Die Wassermengen, die zweckmässigerweise verwendet werden können, betragen 0,01 bis 5 Gew.%, vorzugsweise 0,1 bis 1 Gew.%, bezogen auf das Gewicht an Polyesterol.

Andere verwendbare Treibmittel, die vorzugsweise verwendet werden, sind niedrigsiedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte von nicht über 100 °C bei Atmosphärendruck, vorzugsweise zwischen -40 und +50 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

Die zweckmässigste Menge an niedrigsiedender Flüssigkeit zur Herstellung der zellhaltigen Polyurethan-Elastomeren hängt ab von der Dichte, die man erreichen will, sowie gegebenenfalls von der Mitverwendung von Wasser. Im allgemeinen liefern Mengen von 0,5 bis 20 Gew.%, bezogen auf das Gewicht des organischen Polyisocyanats, zufriedenstellende Ergebnisse.

Der Reaktionsmischung können auch noch Hilfsmittel und Zusatzstoffe einverleibt werden. Genannt seien beispielsweise Reaktionsverzögerer, Stabilisatoren, Hydrolysenschutzmittel, Porenregler, fungizid und bakteriozid wirkende Substanzen, Farbstoffe, Pigmente, Füllstoffe, oberflächenaktive Stoffe und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,2 bis 6 Gewichtsteilen pro 100 Gewichtsteilen Polyisocyanat angewandt werden.

Als Flammschutzmittel seien neben gegebenenfalls halogensubstituierten Phosphaten, wie Trikresylphosphat, Tris-2-chloräthylphosphat, Tris-chlorpropylphosphat und Tris-2,3-dibrompropylphosphat und organischen Halogenverbindungen wie Polybromdiphenyläther, Bromoligomerstyrol, anorganische Flammschutzmittel, wie Antimontrioxid, Arsenoxid, Ammoniumphosphat, Calciumphosphat und roter phosphor genannt. Im allgemeinen hat es sich als vorteilhaft erwiesen, 5 bis 50 Gewichtsteile, vorzugsweise 5 bis 25 Gewichtsteile eines oder mehrerer der genannten Flammschutzmittel für jeweils 100 Gewichtsteile Polyurethan zu verwenden.

Zur Herstellung der gegebenenfalls zellhaltigen Polyurethan-Elastomeren werden die Polyesterole, niedermolekularen Kettenverlängerungsmittel und organischen Polyisocyanate in solchen Mengen zur Reaktion gebracht, dass das Verhältnis von NCO-Gruppen zu OH-Gruppen bzw. der Summe aus OH-Gruppen und anderen Gruppen mit Zerewitinoff aktiven Wasserstoffatomen, beispielsweise NH- oder $NH_2$-Gruppen 1:0,9 bis 1,08, vorzugsweise 1:0,98 bis 1,04 beträgt.

Die Herstellung der gegebenenfalls zellhaltigen Polyurethan-Elastomeren geschieht nach dem Präpolymer- oder one shot-Verfahren. Zur Herstellung kompakter Polyurethan-Elastomerer werden die erfindungsgemäss verwendbaren Polyesterole, Kettenverlängerungsmittel und Polyisocyanate gegebenenfalls in Gegenwart von Katalysatoren, Hilfs- und Zusatzstoffen bei Temperaturen von 15 bis 260 °C, vorzugsweise von 60 bis 240°C, in Lösung oder vorzugsweise in der Schmelze umgesetzt. In Betracht kommen sowohl hochpolare als auch wenig polare Lösungsmittel der an sich bekannten Art oder entsprechende Lösungsmittelgemische. Als Lösungsmittel seien beispielsweise genannt: Dimethylformamid, Dimethylacetamid, Dimethylsulfoxid, N-Methyl-pyrrolidon, Tetramethylharnstoff, Tetrahydrofuran, Dioxan, Äthylacetat, Methylglykolacetat, Äthylglykolacetat, Aceton, Methyläthylketon, Methylisobutylketon, Cyclohexanon, Toluol, Xylol, Cyclohexan, Hexan, Isopropanol und Isobutanol.

Erfolgt die Umsetzung nach dem Präpolymerverfahren, so wird zunächst aus dem Polyesterol mit überschüssigem Polyisocyanat ein isocyanatgruppenhaltiges Präpolymeres hergestellt, das nach Zugabe des Kettenverlängerungsmittels unter Formgebung gegossen oder gegebenenfalls nach der Aushärtung in ein Granulat übergeführt wird, das sich bei erhöhter Temperatur unter Formgebung verpressen, extrudieren, spritzgiessen oder kalandrieren lässt.

Nach einer anderen Arbeitsweise wird das Kettenverlängerungsmittel dem erfindungsgemäss verwendbaren Polyesterol einverleibt und das erhaltene Gemisch im sogenannten one shot-Verfahren mit dem Polyisocyanat umgesetzt.

Zur Herstellung von zellhaltigen Polyurethan-Elastomeren, die vorzugsweise nach dem one shot-Verfahren erfolgt, wird üblicherweise eine Mischung aus Polyesterol, Kettenverlängerungsmittel, Treibmittel und gegebenenfalls Katalysator, Hilfs- und Zusatzstoffen mit den organischen Polyisocyanaten bei Temperaturen von 15 bis 60°C, vorzugsweise von 20 bis 50°C zur Umsetzung gebracht. Bei Verwendung einer Mischkammer mit mehreren Zulaufdüsen können die flüssigen Ausgangsstoffe einzeln zugeführt und in der Mischkammer intensiv vermischt werden. Als besonders zweckmässig hat es sich jedoch erwiesen, nach dem Zweikomponenten-Verfahren zu arbeiten und als Komponente A eine Mischung aus Polyesterol, Kettenverlängerungsmittel, Treibmittel, gegebenenfalls Katalysator, Hilfs- und Zusatzstoffen und als Komponente B die organischen Polyisocyanate zu verwenden.

Die erfindungsgemäss hergestellten kompakten Polyurethan-Elastomeren besitzen Dichten von 1100 bis 1280 g/l und Shore-Härten von 55°A bis 78°D. Die Produkte finden Verwendung als Dichtungsmassen, Beschichtungsmittel, Schuhsohlenmaterialien sowie zur Herstellung von Formkörpern, Maschinenelementen und sonstigen Gebrauchsartikeln.

Die zellhaltigen Polyurethan-Elastomeren besitzen Dichten von 10 bis 1000 g/l und eignen sich besonders zur Herstellung von Automobilteilen, wie Nackenstützen und Armlehnen, sowie von Schuhsohlen und Weichschäumen.

Die gegebenenfalls zellhaltigen Polyurethan-Elastomeren besitzen ein ausserordentlich günstiges Kälteverhalten und ausgezeichnete Hydrolysebeständigkeit bei hoher mechanischer Festigkeit sowie einen sehr guten Druckverformungsrest.

Die in den Beispielen genannten Teile beziehen sich auf das Gewicht.

Die Beispiele 1-5 beziehen sich nicht auf das erfindungsgemässe Verfahren, sondern auf die Herstellung der beim erfindungsgemässen Verfahren einzusetzenden Polyesterole.

Beispiel 1

58,5 Gewichtsteile Adipinsäure und 46,8 Gewichtsteile einer Diolmischung aus 27% Butandiol-1,4, 47% Pentandiol-1,5 und 26% Hexandiol-1,6 werden bei Normaldruck unter Abdestillieren des Kondensationswassers bei Temperaturen bis 210°C verestert. Dann wird die Veresterung nach Druckerniedrigung bis ca. 40 mbar zu Ende geführt. Bei 14,9 Gewichtsteilen Destillat erhält man ein bei Raumtemperatur flüssiges Polyesterol mit folgenden Kennzahlen:

OH-Zahl: 54,2 mg KOH/g
Säurezahl: 0,4 mg KOH/g
Viskosität (75 °C): 625 mPas
Jodfarbzahl: 1

Beispiel 2

Gemäss Beispiel 1 werden 122,5 Gewichtsteile Adipinsäure und 108,1 Gewichtsteile einer Diolmischung aus 27% Butandiol-1,4, 47% Pentandiol-1,5 und 26% Hexandiol-1,6 verestert. Bei 33 Gewichtsteilen Destillat erhält man ein bei Raumtemperatur flüssiges Polyesterol mit folgenden Kennzahlen:
OH-Zahl: 104 mg KOH/g
Säurezahl: 0,3 mg KOH/g
Viskosität (75 °C): 180 mPas
Jodfarbzahl: 1

Beispiel 3

179 Gewichtsteile Dicarbonsäuregemisch, bestehend aus 29% Bernsteinsäure, 44% Glutarsäure, 26% Adipinsäure und 1% Bernsteinsäure- und Glutarsäureimid, 80,8 Gewichtsteilen Äthylenglykol und 50,2 Gewichtsteilen einer Diolmischung aus 27% Butandiol-1,4, 47% Pentandiol-1,5 und 26% Hexandiol-1,6 werden gemäss Beispiel 1 verestert, bis die Säurezahl ca. 1 mg KOH/g erreicht ist. Anschliessend wird überschüssiges Äthylenglykol abdestilliert und die OH-Zahl eingestellt. Nach Abziehen von 72,8 Gewichtsteilen Destillat erhält man ein bei Raumtemperatur flüssiges Polyesterol mit folgenden Kennzahlen:
OH-Zahl: 56,9 mg KOH/g
Säurezahl: 0,4 mg KOH/g
Viskosität (75 °C): 655 mPas
Jodfarbzahl: 60

Beispiel 4

146 Gewichtsteile Adipinsäure, 54 Gewichtsteile Äthylenglykol und 57,5 Gewichtsteile einer Diolmischung aus 27% Butandiol-1,4, 47% Pentandiol-1,5 und 26% Hexandiol-1,6 werden gemäss Beispiel 3 verestert.
Bei 60 Gewichtsteilen Destillat erhält man ein bei Raumtemperatur flüssiges Polyesterol mit folgenden Kennzahlen:
OH-Zahl: 56 mg KOH/g
Säurezahl: 0,5 mg KOH/g
Viskosität (75°C): 560 mPas
Jodfarbzahl: 1-2

Beispiel 5

Gemäss Beispiel 1 werden 1578 Gewichtsteile Adipinsäure, 1165 Gewichtsteile einer Diolmischung aus 23% Butandiol-1,4, 51 % Pentandiol-1,5 und 26% Hexandiol-1,6 und 80 Gewichtsteile Trimethylolpropan verestert. Nach Abziehen von 390 Gewichtsteilen Destillat erhält man ein bei Raumtemperatur flüssiges Polyesterol mit folgenden Kennzahlen:
OH-Zahl: 53 mg KOH/g
Säurezahl: 1 mg KOH/g
Viskosität (75 °C): 2000 mPas
Jodfarbzahl: 2

Beispiel 6

In 310 g des Polyesterols aus Beispiel 1 werden bei 100°C unter Rühren 122 g 4,4'-Diphenylmethandiisocyanat eingetragen. Nach 60 Minuten rührt man bei 90°C 29,4 g Butandiol-1,4 in die Schmelze ein und giesst die homogene Mischung in eine auf 110°C geheizte Plattenform. Nach 24 h wird eine 0,5 cm dicke Platte aus elastomerem Polyurethan entformt, woraus die Prüfkörper gewonnen werden. Die Eigenschaften des Produktes sind in Tabelle 1 zusammengestellt.

Beispiel 7

Gemäss Beispiel 6 werden 310 g Polyesterol aus Beispiel 1, 181 g 4,4'-Diphenylmethandiisocyanat und 50,1 g Butandiol-1,4 umgesetzt. Die Eigenschaften des gewonnenen elastomeren Polyurethans sind in Tabelle 1 zusammengestellt.

Beispiel 8

Gemäss Beispiel 6 werden 310 g Polyesterol aus Beispiel 1, 212,4 g 4,4'-Diphenylmethandiisocyanat und 62,2 g Butandiol-1,4 umgesetzt. Die Eigenschaften des gewonnenen elastomeren Polyurethans sind in Tabelle 1 zusammengestellt.

Vergleichsbeispiel A

Gemäss Beispiel 6 werden 292 g eines Polyesterols aus Adipinsäure, Hexandiol-1,6 und Neopentylglykol (molares Diolverhältnis ca. 2:1) mit der OH-Zahl 57,5, 117 g 4,4'-Diphenylmethandiisocyanat und 27,1 g Butandiol-1,4 umgesetzt. Die Eigenschaften des gewonnenen elastomeren Polyurethans sind in Tabelle 1 zusammengestellt.

Vergleichsbeispiel B

Gemäss Beispiel 6 werden 292 g des Polyesterols aus Vergleichsbeispiel A, 173,4 g 4,4'-Diphenylmethandiisocyanat und 46,6 g Butandiol-1,4 umgesetzt. Die Eigenschaften des gewonnenen elastomeren Polyurethans sind in Tabelle 1 zusammengestellt.

Tabelle 1

| Bsp.Nr./Vergleichsbsp. | 6 | 7 | 8 | A | B |
|---|---|---|---|---|---|
| Härte, Shore A | 85 | 90 | 96 | 83 | 90 |
| Härte, Shore D | – | – | 46 | – | – |
| Reissfestigkeit, N/mm² | 40 | 42 | 41 | 35 | 39 |
| Reissdehnung, % | 580 | 605 | 612 | 690 | 600 |
| Reissfestigkeit nach Hydrolyse N/mm² (14d, 80°C, Wasserlagerung) | 21 | 23 | 25 | 17 | 20 |
| Reissdehnung nach Hydrolyse % (14d, 80°C, Wasserlagerung) | 700 | 580 | 580 | 650 | 640 |
| Weiterreissfestigkeit N/mm nach Graves | 41 | 98 | 104 | 40 | 95 |
| Glasübergangstemperatur °C (Differentialthermoanalyse) | – 40 | – 38 | – 38 | – 28 | – 27 |
| Druckverformungsrest, % nach DIN 53 517, 70°C | 27 | 32 | – | 35 | 47 |

Beispiel 9

149,7 g des Polyesterols aus Beispiel 4 und 14 g Butandiol-1,4 werden in 150 g Dimethylformamid gelöst. Bei 50 °C werden 60,1 g 4,4'-Diphenylmethandiisocyanat unter Rühren zugegeben. Es wird bei 50°C unter weiterer Zugabe von 372 g Dimethylformamid solange gerührt, bis das gebildete Polyurethan einen K-Wert von ca. 60 erreicht hat. (K-Wert als Mass für das Molgewicht, entsprechend DIN 53 726, gemessen in 1%iger Lösung, 25°C).

Danach wird mit zum noch vorhandenen NCO-Gehalt überschüssigem Methanol die Reaktion abgestoppt. Aus der Lösung werden ca. 0,5 mm dicke Polyurethan-Folien hergestellt, an denen die mechanischen Eigenschaften gemessen werden, die in Tabelle 2 zusammengestellt sind.

Die 30%ige Lösung. hat eine Viskosität von 20 Pa.s, der K-Wert ist 60,4.

Vergleichsbeispiel C

Gemäss Beispiel 9 werden 146,7 g eines Polyesterols auf Basis Adipinsäure, Äthylenglykol und Butandiol-1,4 mit molarem Diolverhältnis 1:1 (OH-Zahl: 57,3, Säurezahl: 0,6), 13,7 g Butandiol-1,4 und 58,9 g 4,4'-Diphenylmethandiisocyanat zu einer 30%igen Polyurethanlösung in Dimethylformamid umgesetzt. Die Viskosität der Lösung beträgt 20 Pa.s, der K-Wert ist 60,9.

Beispiel 10

Gemäss Beispiel 9 werden 149,5 g eines Polyesterols gemäss Beispiel 1 mit OH-Zahl 56,2 und Säurezahl 0,4 mit 14 g Butandiol-1,4 und 60 g 4,4'-Diphenylmethandiisocyanat zu einer 30%igen Polyurethanlösung in Dimethylformamid umgesetzt. Die Viskosität der Lösung beträgt 27 Pa.s, der K-Wert ist 61,1.

Die mechanischen Eigenschaften der erhaltenen Elastomeren sind in Tabelle 2 zusammengefasst.

Beispiel 11

a) 310 g des Polyesterols aus Beispiel 1 werden mit 106 g 3-Isocyanatomethyl-3,5,5-trimethylcyclohexylisocyanat in 1 Stunde bei 90°C zu einem Präpolymeren umgesetzt. Nach Lösen in 300 g Dimethylformamid und Abkühlen auf Raumtemperatur wird eine Lösung von 55,6 g 1-Amino-3-aminomethyl-3,5,5-trimethylcyclohexan in 800 g Dimethylformamid zugegeben. Mit 315 g Methyläthylketon wird zu einer 25%igen Lösung verdünnt. Die Viskosität der Lösung beträgt 20 Pa.s; der K-Wert ist 62.

b) Bei gleicher Rezeptur der Reaktionskomponenten mit je 550 g Toluol und Isopropanol als Lösungsmittel wird eine 30%ige Polyurethanlösung mit einer Viskosität von 75 Pa.s erhalten; der K-Wert ist 52,5.

Die gemessenen mechanischen Eigenschaften der Produkte sind in Tabelle 2 zusammengefasst.

Tabelle 2

| Bsp.Nr./Vergleichsbsp. | 9 | C | 10 | 11a | 11b |
|---|---|---|---|---|---|
| Reissfestigkeit, N/mm² | 40 | 38 | 47 | 63 | 66 |
| Reissdehnung, % | 760 | 772 | 660 | 480 | 535 |
| Reissfestigkeit nach Hydrolyse, N/mm², 80°C Wasserlagerung | | | | | |
| 7d | – | 19 | 42 | – | – |
| 14d | 16 | 6 | 32 | 47 | – |
| 21d | – | – | 20 | – | – |
| Reissdehnung nach Hydrolyse, % 80° C Wasserlagerung | | | | | |
| 7d | – | 796 | 670 | – | – |
| 14d | 810 | 415 | 750 | 530 | – |
| 21d | – | – | 795 | – | – |
| Weiterreissfestigkeit, N/mm nach Graves | 47 | 58 | 56 | 65 | 79 |
| Glasübergangstemperatur, °C (Differentialthermoanalyse) | – | – | – | −51 | −53 |

**Patentansprüche**

1. Verfahren zur Herstellung von ggf. zellhaltigen Polyurethan-Elastomeren mit einem guten Druckverformungsrest bei gleichzeitig hoher Hydrolysenbeständigkeit und gutem Tieftemperaturverhalten durch Umsetzung von organischen Polyisocyanaten, höhermolekularen Polyhydroxyverbindungen und Kettenverlängerungsmitteln in solchen Mengen, daß das Verhältnis von NCO-Gruppen zu OH-Gruppen oder der Summe aus OH-Gruppen und anderen Gruppen mit Zerewitinoff-aktiven Wasserstoffatomen 1 : 0,9 bis 1,08 beträgt, in Gegenwart von ggf. Katalysatoren, Treibmitteln, Hilfs- und Zusatzstoffen, wobei die höhermolekulare Polyhydroxyverbindung und das Kettenverlängerungsmittel gemischt und die erhaltene Mischung mit dem organischen Polyisocyanat umgesetzt wird oder aus der höhermolekularen Polyhydroxyverbindung mit überschüssigem Polyisocyanat ein isocyanatgruppenhaltiges Prepolymeres hergestellt wird, das mit dem Kettenverlängerungsmittel umgesetzt wird, dadurch gekennzeichnet, daß man als Polyhydroxyverbindungen flüssige Polyesterole mit Molekulargewichten von 600 bis 4000 verwendet, die durch Polykondensation von organischen Dicarbonsäuren mit einem Alkoholgemisch hergestellt werden, das besteht aus:

40 bis 100 Gew.-%, bezogen auf das Alkoholgemisch, einer Diolmischung, die ihrerseits im wesentlichen besteht aus

a) 10 bis 30 Gew.-% Butandiol-1,4,

b) 40 bis 60 Gew.-% Pentandiol-1,5 und

c) 15 bis 35 Gew.-% Hexandiol-1,6,

wobei die Gew.-% bezogen sind auf das Gesamtgewicht der Diolmischung,

und

60 bis 0 Gew.-%, bezogen auf das Alkoholgemisch, eines zweiwertigen Alkohols aus der Gruppe von Ethylenglykol, Propylenglykol-1,2 und -1,3, Octandiol-1,8, Neopentylglykol, 1,4-Bis-(hydroxymethyl)-cyclohexan, 2-Methylpropandiol-1,3, 3-Methylpentandiol-1,5, Diethylenglykol, Dipropylenglykol und Dibutylenglykol

oder

90 bis 98 Gew.-%, bezogen auf das Alkoholgemisch, der obengenannten Diolmischung und

2 bis 10 Gew.-%, bezogen auf das Alkoholgemisch, eines drei- und/oder vierwertigen Alkohols und als Kettenverlängerungsmittel Verbindungen mit Molekulargewichten kleiner als 450 verwendet, ausgewählt aus der Gruppe der Diole und aliphatischen, cycloaliphatischen, aromatischen oder araliphatischen Diamine.

2. Verfahren gemäss Anspruch 1, dadurch gekennzeichnet, dass als organische Dicarbonsaüre Adipinsäure verwendet wird.

3. Verfahren gemäss Anspruch 1, dadurch gekennzeichnet, dass das Polyesterol hergestellt wird durch Polykondensation von Adipinsaüre mit einer Diolmischung, die besteht aus

18 bis 28 Gew.-% Butandiol-1,4

45 bis 55 Gew.-% Pentandiol-1,5 und

25 bis 30 Gew.-% Hexandiol-1,6,

wobei die Gew.-% bezogen sind auf das Gesamtgewicht der Diolmischung.

## Claims

1. A process for the preparation of cellular or noncellular polyurethane elastomers having good compression set at the same time as high hydrolysis resistance and good low-temperature behavior, by reacting an organic polyisocyanate, a high-molecular-weight polyhydroxyl compound and a chain extender in such amounts that the ratio between NCO groups and OH groups or the sum of OH groups and other groups containing Zerewitinoff-active hydrogen atoms is from 1 : 0.9 to 1.08, in the presence or absence of catalysts, blowing agents, auxiliaries and additives, where the high-molecular-weight polyhydroxyl compound and the chain extender are mixed, and the resultant mixture is reacted with the organic polyisocyanate, or an isocyanate-containing prepolymer is prepared from the high-molecular-weight polyhydroxyl compound and excess polyisocyanate and is reacted with the chain extender, which comprises using, as the polyhydroxyl compound, a liquid polyesterol having a molecular weight of from 600 to 4,000, prepared by polycondensing an organic dicarboxylic acid with an alcohol mixture comprising:

from 40 to 100% by weight, based on the alcohol mixture, of a diol mixture which itself essentially comprises

    a) from 10 to 30% by weight of 1,4-butanediol,

    b) from 40 to 60% by weight of 1,5-pentanediol and

    c) from 15 to 35% by weight of 1,6-hexanediol,

the % by weight data being based on the total weight of the diol mixture,

and

from 60 to 0% by weight, based on the alcohol mixture, of a dihydric alcohol from the group comprising ethylene glycol, 1,2- and -1,3-propylene glycol, 1,8-octanediol, neopentyl glycol, 1,4-bis(hydroxymethyl)cyclohexane, 2-methyl-1,3-propanediol,3-methyl-1,5-pentanediol, diethylene glycol, dipropylene glycol and dibutylene glycol, or

from 90 to 98% by weight, based on the alcohol mixture, of the abovementioned diol mixture and

from 2 to 10% by weight, based on the alcohol mixture, of a trihydric and/or tetrahydric alcohol, and

using, as the chain extender, a compound having a molecular weight of less than 450, selected from the group comprising the diols and aliphatic, cycloaliphatic, aromatic or araliphatic diamines.

2. A process as claimed in claim 1, wherein the organic dicarboxylic acid used is adipic acid.

3. A process as claimed in claim 1, wherein the polyesterol is prepared by polycondensing adipic acid with a diol mixture comprising

from 18 to 28% by weight of 1,4-butanediol,

from 45 to 55% by weight of 1,5-pentanediol and

from 25 to 30% by weight of 1,6-hexanediol,

the % by weight data being based on the total weight of the diol mixture.

## Revendications

1. Procédé de préparation d'élastomères de polyuréthannes éventuellement cellulaires, à bonne déformation permanente à la compression pour une résistance ou stabilité à l'hydrolyse simultanément élevée et un bon comportement aux basses températures, par la réaction de polyisocyanates organiques, de composés polyhydroxylés de poids moléculaire élevé et d'agents d'allongement des chaînes, en proportions telles que le rapport des radicaux NCO aux radicaux OH, ou la somme des radicaux OH et d'autres radicaux à atomes d'hydrogène actifs selon Zerewitinoff, fluctue de 1:0,9 à 1,08, en présence de catalyseurs, d'agents porogènes, d'adjuvants et d'additifs, où on mélange le composé polyhydroxylé de poids moléculaire élevé et l'agent d'allongement des chaînes et on fait réagir le mélange obtenu avec le polyisocyanate organique, ou bien l'on prépare, à partir du composé polyhydroxylé de poids moléculaire élevé avec du polyisocyanate en quantité excédentaire, un prépolymère contenant des radicaux isocyanate, que l'on fait réagir avec l'agent d'allongement des chaînes, caractérisé en ce qu'à titre de composés polyhydroxylés, on utilise des polyestersols liquides avec des poids moléculaires de 600 à 4.000, que l'on prépare par la polycondensation d'acides dicarboxyliques organiques avec un mélange d'alcools, qui se compose de

40 à 100% en poids, par rapport au mélange d'alcools, d'un mélange de diols qui, de son côté, est essentiellement constitué de

    a) 10 à 30% en poids de butanediol-1,4,

    b) 40 à 60% en poids de pentanediol-1,5 et

    c) 15 à 35% en poids d'hexanediol-1,6,

où les pourcentages pondéraux se rapportent au poids total du mélange des diols

et

60 à 0% en poids, par rapport au mélange d'alcools, d'un alcool dihydroxylé, qui appartient au groupe de l'éthylèneglycol, du propylèneglycol-1,2 et -1,3, de l'octanediol-1,8, du néopentylglycol, du 1,4-bis-(hydroxyméthyl)-cyclohexane, du 2-méthylpropanediol-1,3, du 3-méthylpentanediol-1,5, du diéthylèneglycol, du dipropylèneglycol et du dibutylèneglycol,

où

90 à 98% en poids, par rapport au mélange d'alcools, du mélange des diols susmentionné et

2 à 10% en poids, par rapport au mélange d'alcools, d'un alcool trihydroxylé et/ou tétrahydroxylé et

à titre d'agents d'allongement des chaînes, on utilise des composés avec des poids moléculaires inférieurs à 450, choisis dans le groupe formé par les diols et les diamines aliphatiques, cycloaliphatiques, aromatiques ou araliphatiques.

    2. Procédé selon la revendication 1, caractérisé par le fait que l'on utilise comme acide dicarboxylique organique de l'acide adipique.

    3. Procédé selon la revendication 1, caractérisé par le fait que le polyestérol est préparé par polycondensation d'acide adipique avec un mélange de diols constitué de

18 à 28% en poids de butanediol-1,6

45 à 55% en poids de pentanediol-1,5 et

25 à 30% en poids d'hexanediol-1,6,

les pourcentages en poids étant rapportés au poids total du mélange de diols.